# FASCICULE DE BREVET EUROPEEN

(11) **EP 1 692 422 B1**
(45) Date de publication et mention de la délivrance du brevet: **10.07.2013**
(21) Numéro de dépôt: 04805514.9
(22) Date de dépôt: 23.11.2004
(51) Int. Cl.: F16L 15/04, F16L 13/14

(54) **REALISATION, PAR EXPANSION PLASTIQUE, D'UN ASSEMBLAGE DE DEUX JOINTS TUBULAIRES FILETES ETANCHES AVEC UNE SOUS- PAISSEUR DE MATIERE LOCALE ET INITIALE**
VERFAHREN ZUR MONTAGE ZWEIER HERMETISCHER RÖHRENGEWINDEVERBINDUNGEN MIT LOKALER UND ANFÄNGLICHER ZUSATZDICKE DURCH PLASTISCHE EXPANSION
METHOD OF ASSEMBLING TWO HERMETIC THREADED TUBULAR JOINTS COMPRISING A LOCAL AND INITIAL ADDED THICKNESS, BY MEANS OF PLASTIC EXPANSION

(30) Priorité: 28.11.2003 FR 0314039
(43) Date de publication de la demande: 23.08.2006
(73) Titulaire: VALLOUREC MANNESMANN OIL & GAS FRANCE, 59620 Aulnoye-Aymeries (FR)
(72) Inventeur: Dubedout, Laurent, F-59300 Valenciennes (FR); Duquesne, Benoît, Rés. le Jardin du Théâtre, F-59300 Valenciennes (FR); VERGER, Eric, 59144 Gommegnies (FR)
(74) Mandataire: Plaçais, Jean Yves
(86) Numéro de dépôt international: PCT/FR2004/002985
(87) Numéro de publication internationale: WO 2005/064218

(56) Documents cités:
- EP-B1- 0 703 396
- WO-A-98/42947
- WO-A-03/060370
- WO-A2-97/21901
- US-A- 3 047 316
- US-A- 4 611 838
- US-A1- 2002 163 192
- US-B1- 6 347 814

## Description

L'invention concerne le domaine des joints tubulaires, comme par exemple ceux utilisés dans les puits d'hydrocarbures ou les puits similaires tels que les puits géothermiques.

Ces joints servent généralement à connecter entre eux des tubes de grande longueur, ou bien des tubes de grande longueur et des manchons (on parle alors d'assemblage de joints). Ils permettent ainsi de constituer des colonnes de tubes de cuvelage (ou "casings") ou de production (ou "tubings").

Par ailleurs, ces joints doivent supporter d'importantes contraintes de flexion, de traction, de compression, et parfois de torsion, ainsi que d'importants écarts de pression entre l'intérieur et l'extérieur. En outre, ces joints doivent parfois être également étanches aux gaz. Pour ces raisons, les joints sont fréquement de type fileté et les manchons et tubes sont généralement en acier ou en alliage à hautes limites d'élasticité (obtenues éventuellement par traitements thermiques). Dans le cas de joints filetés, l'étanchéité aux gaz est le plus souvent assurée par des portées d'étanchéité avec contact serrant de type "métal sur métal".

Afin de réduire l'encombrement initial des tubes, ainsi qu'éventuellement permettre le forage de puits de diamètre uniforme, il a été proposé, notamment dans les documents US 6,604,763 et WO 03/071086, de les expanser diamétralement à force in situ à l'aide d'un outil d'expansion appelé "boulet". Une première application de tubes expansés a été réalisée pour les crépines tubulaires destinées à collecter les hydrocarbures. Des joints pour de telles crépines sont décrits par exemple dans WO98//42947. Des joints filetés étanches, comme par exemple ceux décrits dans le document EP 0488912, peuvent supporter une telle expansion mais perdent leurs caractéristiques d'étanchéité lors de l'expansion, le nez en extrémité de l'élément mâle qui porte une surface d'étanchéité mâle plongeant vers l'axe lors de l'expansion (effet "banane"), ce qui rompt l'étanchéité.

Afin de résoudre ce problème, la Demanderesse a proposé dans le document WO 02/01102 un joint tubulaire fileté dont le nez mâle est muni en extrémité d'un doigt annulaire encastré dans une rainure femelle, la rainure formant un support pour le doigt et empêchant la plongée du doigt mâle vers l'axe, lors de l'expansion.

Un tel joint fileté ne présente toutefois pas de caractéristiques d'étanchéité suffisamment élevées lorsque le taux d'expansion est supérieur à 10%. En effet, les déformations induites par le boulet d'expansion déplacent, voire même suppriment, les contacts entre le doigt mâle et la rainure, ce qui déplace, en les diminuant, voire même en les supprimant, les contacts serrants entre surfaces d'étanchéité.

Par "contact serrant" on entend ici un contact développant une pression de contact entre deux surfaces en contact. Plus la pression de contact est élevée, plus la pression du fluide que peut supporter le joint sans que l'étanchéité soit rompue peut être élevée. Outre la pression du fluide, laquelle peut s'exercer à l'intérieur ou à l'extérieur du joint fileté, des charges axiales de traction ou de compression peuvent modifier la pression de contact, et par conséquent les caractéristiques d'étanchéité. En d'autres termes, en raison du mode de réalisation de ces joints leur étanchéité peut ne pas être identique vis-à-vis de la pression interne ou de la pression externe, ni être stable en fonction du chargement

Afin d'améliorer la situation, la Demanderesse a proposé, dans le document WO03/060370, un joint tubulaire d'étanchéité métal/métal muni d'un doigt (ou lèvre) annulaire, décrit dans le document WO 02/01102 et présentant des épaulements mâles et femelles inclinés, fortement serrés l'un contre l'autre après expansion, l'épaulement sur l'élément femelle étant constitué par le flanc d'une gorge, et l'épaulement sur l'élément mâle pouvant préexister ou résulter de l'impression de l'élément mâle au fond de la gorge lors de l'expansion.

Ce joint a été conçu pour être étanche à des taux d'expansion élevés, typiquement supérieurs à 10%, mais ses caractéristiques d'étanchéité peuvent se révéler insuffisantes lorsque les caractéristiques d'étanchéité exigées dans les divers modes de chargement sont élevées, notamment dans le cas de joints manchonnés. En effet, ces derniers, et les matériaux qui les constituent, doivent supporter des efforts d'expansion importants, et le contrôle de la déformation des portées et butées est rendu difficile, ce qui ne permet pas toujours d'assurer une étanchéité suffisante aux gaz haute pression avant la phase d'expansion.

L'invention a donc pour but d'améliorer la situation, notamment en terme d'efforts d'expansion dans le cas de joints impliquant des manchons de raccordement et des tubes de grande longueur, et notamment en présence de taux d'expansion très élevés, typiquement supérieurs à 10%.

Elle propose à cet effet un assemblage constitué de deux joints tubulaires fileté étanches expansibles, disposés symétriquement par rapport à un plan de symétrie perpendiculaire à la direction longitudinale et comprenant chacun:
* d'une part, un premier élément tubulaire placé à une extrémité d'un tube et comportant une première partie, munie d'un filetage mâle, et une seconde partie prolongeant ladite première partie et comprenant i) une première surface externe, ii) une première lèvre annulaire ayant une première surface de butée axiale et une première surface interne et délimitée par ladite première surface externe sur une partie de la longueur axiale de celle-ci, et iii) une deuxième surface de butée;
* d'autre part, un second élément tubulaire comportant i) un filetage femelle, homologue du premier filetage mâle et vissé sur celui-ci, ii) une seconde lèvre annulaire, ayant une troisième surface de butée, une deuxième surface externe, propre à être placée en regard de ladite première surface interne, et une deuxième surface interne, et iii) une troisième surface interne et une quatrième surface de butée axiale définissant avec la deuxième surface externe un logement annulaire homologue de la première lèvre correspondante et recevant celle-ci

Cet assemblage se caractérise par le fait que lesdits deux seconds éléments tubulaires constituent deux extrémités opposées d'un manchon de raccordement de type femelle/femelle, séparées par une partie centrale initialement munie, sur une surface externe, d'une zone annulaire présentant une sous-épaisseur initiale choisie de sorte que la section du manchon au niveau de cette zone soit supérieure ou égale au produit de la section d'une partie courante desdits tubes par l'efficacité du joint, que chaque deuxième surface de butée soit en appui contre la troisième surface de butée correspondante et/ou que chaque première surface de butée soit en appui contre la quatrième surface de butée correspondante et en ce que l'assemblage est apte à développer après une expansion diamétrale dans le domaine de la déformation plastique des contacts serrants et étanches rendant l'assemblage étanche.

On entend par "partie courante d'un tube" la partie centrale éloignée de ses deux extrémités et de diamètre sensiblement constant.

En réduisant ainsi l'épaisseur du manchon au niveau de sa partie centrale, on diminue notablement les pressions et forces d'expansion subies par le joint et l'on peut contrôler les déformations au niveau des butées et des portées.

L'assemblage selon l'invention peut comporter d'autres caractéristiques qui pourront être prises séparément ou en combinaison, et notamment :
- la zone de sous-épaisseur en forme de cuvette peut être munie d'une partie centrale présentant la sous-épaisseur maximale et de parois latérales inclinées selon un angle inférieur à environ 30°, et de préférence égal à environ 15°, par rapport à la direction longitudinale du tube.
- la cuvette peut s'étendre sensiblement entre les troisièmes surfaces de butée des deux seconds éléments tubulaires, voire même entre les derniers filets des deux filetages femelle,
- ledit second élément tubulaire comprend en un endroit choisi de sa troisième surface interne une gorge annulaire interne placée sensiblement au niveau de ladite première surface externe.
- ladite gorge comporte initialement au moins deux portions curvilignes.
- lesdites portions curvilignes présentent initialement des rayons de courbure sensiblement identiques.
- ledit rayon de courbure est initialement compris entre environ 2 mm et environ 20 mm.
- les deux portions curvilignes sont séparées par une partie centrale sensiblement cylindrique.
- ladite gorge présente initialement une profondeur radiale dont la valeur maximale est choisie de sorte que la section de matière en fond de gorge soit supérieure au produit de la plus faible section d'une partie courante desdits tubes par l'efficacité du joint en traction.
- lesdites première surface externe et troisième surface interne sont conformées de sorte qu'après expansion un contact serrant et étanche soit défini entre une portion de chacune d'elles.
- lesdits premier et second éléments tubulaires sont conformés de sorte qu'après ladite expansion un contact serrant et étanche soit défini entre une partie d'extrémité interne de ladite première lèvre et ladite deuxième surface externe.

L'invention concerne également un procédé de réalisation d'un assemblage de deux joints tubulaires expansés à partir desdits joints aptes à former un assemblage initial du type de celui présenté ci-avant.

Un tel procédé est particulièrement bien adapté, bien que de façon non limitative, à l'expansion radiale du joint selon un taux d'expansion au moins égal à 10%.

D'autres caractéristiques et avantages de l'invention apparaîtront à l'examen de la description détaillée ci-après, et des dessins annexés, sur lesquels :
- la figure 1 illustre de façon schématique, dans une vue en coupe longitudinale, une partie d'un exemple de réalisation d'un assemblage de deux joints filetés expansibles selon l'invention, disposés symétriquement,
- la figure 2 illustre de façon schématique, dans une vue en coupe longitudinale, une partie d'un filetage femelle conique et du filetage mâle conique homologue avant vissage et expansion,
- la figure 3 illustre de façon schématique, dans une vue en coupe longitudinale, une partie de l'extrémité mâle d'un tube de l'un des joints filetés expansibles de la figure 1,
- la figure 4 illustre de façon schématique, dans une vue en coupe longitudinale, une partie de l'une des deux extrémités femelles du manchon de la figure 1,
- la figure 5 illustre de façon schématique, dans une vue en coupe longitudinale, les forces générées sur les extrémités mâle et femelle du tube et du manchon des figures 3 et 4 pendant la première étape de vissage,
- la figure 6 illustre de façon schématique, dans une vue en coupe longitudinale, les forces générées sur les extrémités mâle et femelle du tube et du manchon des figures 3 et 4 pendant la seconde étape de vissage,
- la figure 7 illustre de façon schématique, dans une vue en coupe longitudinale, les forces générées sur les extrémités mâle et femelle du tube et du manchon des figures 3 et 4 pendant l'étape d'expansion par déformation plastique,
- la figure 8 illustre de façon schématique, dans une vue en coupe longitudinale, les déformations subies par les extrémités mâle et femelle du tube et du manchon des figures 3 et 4 après l'étape d'expansion,
- la figure 9 illustre de façon schématique, dans une vue en coupe longitudinale, une partie d'un autre exemple de réalisation d'extrémité mâle d'un premier tube d'un joint fileté expansible selon l'invention,
- la figure 10 illustre de façon schématique, dans une vue en coupe longitudinale, une partie d'un autre exemple de réalisation d'extrémité femelle d'un second tube d'un joint fileté expansible selon l'invention, et
- la figure 11 illustre de façon schématique, dans une vue en coupe longitudinale, les positions relatives des extrémités mâle et femelle des tubes des figures 9 et 10 après la phase de vissage.

Les dessins annexés pourront non seulement servir à compléter l'invention, mais aussi contribuer à sa définition, le cas échéant.

L'invention concerne un assemblage de deux joints tubulaires filetés, étanches et disposés symétriquement, pouvant être notamment utilisé dans un puits d'hydrocarbures ou dans un puits similaire tel qu'un puits géothermique, et le procédé de réalisation associé.

Comme indiqué dans l'introduction, un assemblage de deux joints filetés peut permettre de constituer des colonnes de tubes de cuvelage ou de production, par assemblage de tubes métalliques de grande longueur par l'intermédiaire de manchons métalliques.

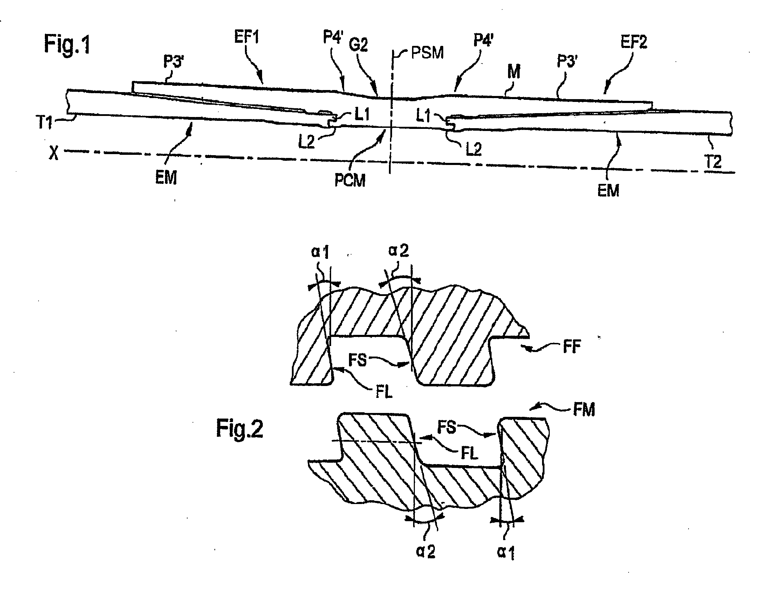

On se réfère aux figures 1 à 8 pour décrire un exemple de réalisation d'un assemblage de deux joints filetés selon l'invention. Dans cet exemple, comme cela est partiellement illustré sur la figure 1, deux joints (dits "manchonnés") permettent de connecter deux tubes T1 et T2, d'axe de révolution XX et de grande longueur, c'est-à-dire de plusieurs mètres de longueur, par l'intermédiaire d'un manchon de raccordement M. Plus précisément, chaque tube T1, T2 comporte une extrémité de type mâle EM (ou élément tubulaire mâle) destinée à être raccordé à l'une des deux extrémités de type femelle EF (ou éléments tubulaires femelles) du manchon M. Un joint est donc ici constitué d'un élément tubulaire mâle EM appartenant à un tube de grande longueur T1, T2 et assemblé à un élément tubulaire femelle EF appartenant à un manchon M, et un assemblage est donc constitué de deux joints séparés par la partie centrale PCM d'un manchon M. Dans le mode de réalisation illustré, les tubes T1 et T2 présentent par exemple une partie courante dont le diamètre extérieur initial est égal à environ 193,68 mm (ou 7" 5/8). La partie courante d'un tube est la partie centrale éloignée de ses deux extrémités et de diamètre sensiblement constant.

Comme cela est illustré sur la figure 1, l'extrémité mâle EM d'un tube T1, T2 comporte deux parties P1 et P2. La première partie P1 prolonge la partie centrale du tube T1, T2 et est pourvue d'un filetage mâle externe FM, de préférence de type conique, mais il pourrait être également de type cylindrique.

Par exemple, comme illustré sur la figure 2 on prévoit un filetage conique dont la conicité ΔD/D, où D est le diamètre, est de 10%. Par ailleurs, le jeu axial (ou longitudinal) entre les filets est initialement suffisamment important pour leur offrir une certaine liberté de déplacement lors de l'expansion diamétrale, sur laquelle on reviendra plus loin. Par exemple, le jeu axial entre les flancs d'engagement (ou "flanc stabbing") FS des filets des filetages mâle FM et femelle FF est compris entre environ 0,05 mm et environ 0,3 mm.

En outre, afin d'assurer une bonne tenue en traction, mais surtout en compression, et par conséquent de diminuer les risques de désengagement ou dégrainage des filets mâle et femelle avant, pendant et après l'expansion, le flanc porteur (ou "flanc loading") FL des filets est par exemple incliné par rapport à la direction radiale d'un angle négatif α1 compris entre environ-3° et environ - 15° et plus préférentiellement égal à environ - 10°, tandis que le flanc d'engagement FS des filets est par exemple incliné par rapport à la direction radiale d'un angle positif α2 compris entre environ+ 10° et environ+ 30°, et plus préférentiellement égal à environ + 15°.

L'angle négatif α1 permet d'éviter le désengagement ou dégrainage des filets en prise, notamment sous traction. Par ailleurs, plus l'angle positif α2 est grand, plus l'engagement des filets est facile, mais plus la tenue à la compression est dégradée.

Il est important de noter que les filetages mâle FM et femelle FF peuvent être chacun formés sur au moins une portion d'élément tubulaire EM, EF. En d'autres termes, ils peuvent être réalisés en une ou plusieurs parties. Lorsqu'ils sont constitués de deux parties celles-ci peuvent être éventuellement formées sur deux surfaces radialement distinctes ou alternativement sur une même surface.

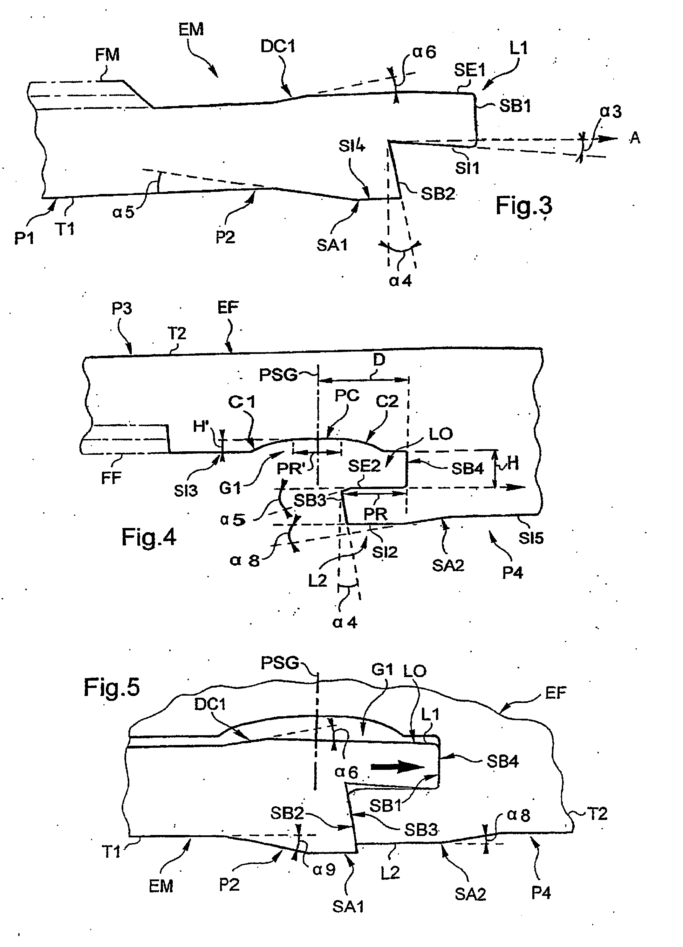

La seconde partie P2 prolonge la première partie P1 à l'extrémité du tube T1, T2. Elle comprend tout d'abord, comme illustré sur la figure 3, une première lèvre annulaire (ou doigt annulaire) L1 comprenant une première surface de butée axiale SB1, initialement sensiblement plane et perpendiculaire à la direction longitudinale A du tube T1, T2 (parallèle à XX), une première surface interne SI1, prolongeant initialement de façon sensiblement perpendiculaire la première surface de butée axiale SB1 en direction de la première partie P1 et orientée vers l'intérieur du tube T1, T2 (c'est-à-dire du côté opposé au filetage mâle FM), et une portion d'une première surface externe SE1, prolongeant également la première surface de butée axiale SB1 en direction de la première partie P1 et orientée vers l'extérieur du tube T1. La première surface externe SE1 de la seconde partie P2 de l'élément mâle EM s'étend de la première surface de butée SB1 jusqu'au niveau du filetage mâle FM. La seconde partie P2 comprend en outre une deuxième surface de butée SB2 prolongeant la première surface interne SI1 et prolongée par une (quatrième) surface interne SI4 au moins en partie cylindrique et destinée à être au contact du fluide (ou gaz) circulant dans le tube T1, T2. Les première surface de butée axiale SB1, première surface interne SI1 et deuxième surface de butée SB2 définissent ce que l'homme de l'art appelle une "feuillure mâle".

Comme cela est illustré sur la figure 3, la première surface interne SI1 peut être inclinée d'un angle α3 choisi par rapport à la direction longitudinale A du tube T1, T2, pour une raison qui sera évoquée plus loin. Elle forme ainsi initialement une surface conique. L'angle d'inclinaison est de préférence compris entre environ 0,1° et environ 15°, et plus préférentiellement égal à environ 2,5 °. Par ailleurs, comme illustré, la première surface externe SE1 peut être légèrement bombée, et plus précisément torique de grand rayon, par exemple entre 20 mm et 100 mm, afin de faciliter son impression dans une gorge G1, comme on le verra plus loin.

Le manchon M, illustré sur la figure 1 est ici de forme symétrique par rapport à un plan de symétrie PSM perpendiculaire à la direction longitudinale A des tubes T1 et T2. Il est par ailleurs de type femelle/femelle.

Ce manchon M comprend une partie centrale PCM prolongée de part et d'autre par deux extrémités femelles EF1, EF2 (ou seconds éléments tubulaires femelles). Chaque extrémité femelle EF1, EF2 comporte une première partie P3-1, P3-2, et deux secondes parties P4-1, P4-2. Chaque première partie P3-1, P3-2 est placée à l'une des deux extrémités du manchon M et est pourvue d'un filetage femelle interne FF, homologue du filetage mâle FM d'une extrémité mâle EM1, EM2.

Comme cela est illustré sur la figure 4, chaque seconde partie P4-1, P4-2 prolonge une première partie P3-1, P3-2 vers la partie centrale PCM. Elle comprend tout d'abord une seconde lèvre annulaire (ou doigt annulaire) L2 comprenant une troisième surface de butée SB3, une deuxième surface externe SE2, orientée vers l'extérieur du manchon M, prolongeant la troisième surface de butée SB3 dans une direction opposée à la première partie P3 et destinée à être placée en regard d'une première surface interne SI1, et une deuxième surface interne SI2 au moins en partie cylindrique, orientée vers l'intérieur du manchon et prolongeant également la troisième surface de butée SB3 dans une direction opposée à la première partie P3.

Chaque seconde partie P4 comprend en outre une quatrième surface de butée axiale SB4, initialement sensiblement plane et perpendiculaire à la direction longitudinale A, et une troisième surface interne SI3 en partie cylindrique, orientée vers l'intérieur du manchon M et prolongeant la quatrième surface de butée axiale SB4 en direction de la première partie P3. Une partie de la troisième surface interne SI3 définit conjointement avec les deuxième surface externe SE2 et quatrième surface de butée SB4 un logement (ou rainure) annulaire LO homologue de l'une des premières lèvres L1 de manière à la recevoir lors de la phase de vissage des tubes T1 et T2, sur laquelle on reviendra plus loin.

Chaque logement LO s'étend sur une longueur axiale choisie PR, égale à celle de la seconde lèvre L2 correspondante, et suivant une profondeur radiale choisie H (perpendiculaire à la direction longitudinale A). Préférentiellement, le rapport PR/H est compris entre environ 1 et environ 3, et plus préférentiellement entre environ 1,2 et environ 1,6. Il est encore plus préférentiellement égal à environ 1,5. Par exemple, PR est égal à 4 mm et H est égal à 2,7 mm, ce qui fournit un rapport PR/H sensiblement égal à 1,5. Comme on le verra plus loin, ces deux dimensions PR et H sont choisies de manière à permettre une déformation choisie de la première lèvre L1.

Les troisième surface de butée SB3, deuxième surface externe SE2 et quatrième surface de butée axiale SB4 définissent ce que l'homme de l'art appelle une "feuillure femelle".

Une gorge annulaire G1 est par ailleurs définie dans une partie au moins de chaque troisième surface interne SI3. Elle comporte initialement, de préférence, une partie centrale PC sensiblement cylindrique et prolongée de part et d'autre par deux portions curvilignes PC1 et PC2. Ces portions curvilignes C1 et C2 présentent initialement, de préférence, des rayons de courbure sensiblement identiques, compris de préférence entre environ 2 mm et environ 20 mm. Mais, cette gorge G1 pourrait ne comporter que deux portions curvilignes.

Par exemple, chaque gorge G1 comprend une partie centrale PC qui s'étend sur une longueur axiale PR' égale à environ 2 mm, une profondeur radiale H' égale à environ 1 mm, et des portions curvilignes C1 et C2 qui présentent un rayon de courbure égal à environ 5 mm. La profondeur radiale H' de la gorge G1 est généralement limitée par l'épaisseur du manchon M, au niveau du plan de symétrie PSG de ladite gorge, laquelle ne doit pas être inférieure à une épaisseur minimale servant au calcul de la section critique du joint fileté. Plus précisément, la valeur maximale de la profondeur radiale H' est choisie de sorte que la section droite de matière en fond de gorge G1 soit supérieure au produit de la section du tube T1 ou T2 dans sa partie courante (ou de la plus faible de ces deux sections si elles sont différentes) par l'efficacité du joint en traction. Le rapport entre la section critique des éléments filetés et la section de tube (T1, T2) caractérise l'efficacité de la connexion (ou du joint), laquelle est avec la section du tube une donnée d'entrée de la conception d'une colonne tubulaire. L'efficacité de la connexion est définie dans *"*Drilling Data Handbook" 7c édition de 1999, Ed Technip ainsi que dans EP 0 703 396, US 3 047 316 et US 6 347 814.

Dans cette configuration, le plan de symétrie PSG de chaque gorge G1 est placé à une distance axiale choisie D de la quatrième surface de butée axiale SB4 qui définit le fond du logement (ou rainure) LO correspondant. Par exemple, avec les valeurs précitées, la distance D est égale à environ 5,61 mm. Par ailleurs, après vissage, la partie centrale PC de la gorge G1 est sensiblement placée à l'aplomb de la surépaisseur SA1.

Comme on le verra plus loin, le rayon de courbure (notamment du côté du filetage), la profondeur radiale H', la longueur axiale PR et la profondeur radiale H sont choisis de manière à permettre la déformation choisie de la première lèvre L1 et de la zone de la seconde partie P2 à la racine de celle-ci.

Chaque seconde partie P4-1, P4-2 comprend également une autre (cinquième) surface interne SI5 cylindrique prolongeant la deuxième surface de butée SB2 dans la direction opposée à la première partie P3 (c'est-à-dire en direction de la partie centrale PCM du manchon M) et destinée à être au contact du fluide (ou gaz) circulant dans le manchon M.

Selon l'invention et comme cela est illustré sur la figure 1, la partie centrale PCM du manchon M comporte une gorge annulaire G2 (également appelée "lunule") définissant localement, sur une surface externe, une zone de sous-épaisseur centrée sur le plan de symétrie PSM.

Cette lunule G2 permet de réduire l'épaisseur du manchon M dans sa partie la plus épaisse et donc de diminuer les pressions et les forces d'expansion. En outre, elle permet de mieux contrôler les déformations au niveau des différentes surfaces de butée (SB1 à SB4) et portées tout en offrant à l'assemblage de joints un aspect sensiblement rectiligne (en surface de révolution extérieure) après expansion. La section initiale du manchon M au niveau de son plan de symétrie PSM doit donc être choisie supérieure ou égale au produit de la section de la partie courante des tubes T1 et T2, aux extrémités desquels sont formés les premiers éléments tubulaires EM, par l'efficacité du joint.

Préférentiellement, la lunule s'étend sensiblement entre les deux troisièmes surfaces de butée axiale SB3 des deux secondes lèvres L1 et L2 opposées. Mais, elle peut s'étendre sur une distance plus importante, notamment entre les derniers filets des deux filetages femelle FF. Les derniers filets sont ici ceux qui sont du côté des troisièmes surfaces de butée SB3.

Par ailleurs, cette lunule G2 peut être en forme de cuvette munie d'une partie centrale présentant la sous-épaisseur maximale (au niveau du plan de symétrie PSM) et de parois latérales inclinées selon un angle de préférence inférieur à environ 30 °, et plus préférentiellement égal à environ 15°.

Il est important de noter que la lunule (et donc la gorge G2) n'est pas forcément symétrique par rapport au plan PSG. Elle peut en effet présenter deux parties dissymétriques de part et d'autre du plan PSG.

La constitution d'un assemblage de joints selon l'invention s'effectue par la mise en oeuvre d'un procédé comportant les étapes suivantes.

Dans une première étape illustrée sur la figure 5, on visse l'extrémité femelle EF1 du manchon M sur l'extrémité mâle EM1 du tube T1, jusqu'à ce que la première surface de butée axiale SB1 de la première lèvre L1 s'appuie sur la quatrième surface de butée axiale SB4 du logement (ou rainure) LO.

Afin de faciliter ce vissage, et comme illustré sur la figure 4, la deuxième surface externe SE2 de chaque seconde lèvre L2 peut présenter sur une courte distance une inclinaison d'un angle choisi α5 par rapport à la direction longitudinale A, au niveau de sa liaison avec la troisième surface de butée SB3. Elle forme ainsi initialement un chanfrein de surface conique. Préférentiellement, cette inclinaison est initialement comprise entre un angle d'environ +8° et un angle d'environ +12. Plus préférentiellement encore, elle est égale à environ 10°. Une telle ou inclinaison permet de faciliter la pénétration de la première lèvre L1 dans le logement (ou rainure) LO, notamment dans le cas d'interférences accidentelles, ce qui permet de diminuer les éventuels risques de grippage ou d'endommagement de la première lèvre L1, et notamment de l'arête d'extrémité de sa première surface interne SI1. Une telle interférence peut en effet survenir entre les première surface interne SI1 et deuxième surface externe SE2 avant que la deuxième surface de butée SB2 ne s'appuie sur la troisième surface de butée SB3.

Puis, dans une deuxième étape on poursuit le vissage jusqu'à ce que la deuxième surface de butée SB2 s'appuie sur la troisième surface de butée SB3. La poursuite du vissage, après la mise en butée de la première surface de butée SB1 sur la quatrième surface de butée SB4, permet d' initier l'emmagasinement d'énergie potentielle élastique dans la première lèvre L1, en mettant celle-ci en compression axiale.

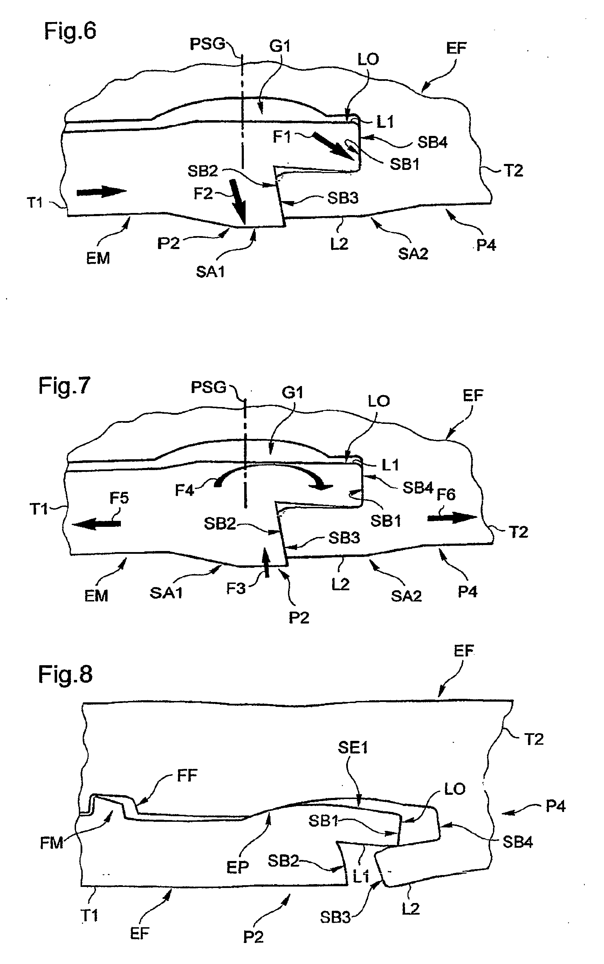

On peut ensuite éventuellement prévoir une troisième étape (illustrée sur la figure 6), dans laquelle on poursuit encore le vissage afin de pré-contraindre radialement la première lèvre L1 du tube T1 en direction de l'axe du joint. Cette précontrainte radiale peut être favorisée par des inclinaisons des deuxième surface de butée SB2 et troisième surface de butée SB3 d'angles choisis α4, par rapport à un plan perpendiculaire à la direction longitudinale A, sensiblement identiques.

Préférentiellement, comme illustré sur les figures 3 et 4, les deuxième SB2 et troisième SB3 surfaces de butée présentent initialement des surfaces coniques respectivement convexe et concave et des inclinaisons sensiblement égales. On entend ici par "inclinaisons sensiblement égales" des inclinaison égales entre elles, à environ ±5° près. Cette inclinaison commune est préférentiellement comprise entre un angle α4 d'environ +5° et un angle α4 d'environ+30°. Elle estplus préférentiellement encore égale à environ 10°. Cette inclinaison permet le serrage entre les première surface interne SI1 et deuxième surface externe SE2 avant la phase d'expansion. Ce serrage permet d'assurer l'étanchéité, notamment au gaz, avant la phase d'expansion.

On obtient ainsi, avant expansion, une excellente étanchéité aux gaz sous pression interne, y compris en présence de forces de traction ou de compression axiale, et une bonne étanchéité sous pression externe, y compris en présence de forces de compression axiale.

Les précontraintes induites sont matérialisées par les flèches F1 et F2 sur la figure 6.

On recommence ensuite les trois étapes décrites ci-avant en vissant l'extrémité mâle EM2 du second tube T2 sur l'extrémité femelle EF2 du manchon M.

Puis, dans une quatrième étape, on introduit axialement dans le tube T2 un outil d'expansion diamétrale, comme par exemple un boulet à tête conique dont le diamètre maximal est supérieur au diamètre interne initial DI des tubes T1 et T2 et du manchon M (égal à 2 fois le rayon interne RI matérialisé sur la figure 1) et est sensiblement égal à leur diamètre interne final. Le choix de la direction d'introduction ne revêt pas une réelle importance parce que le boulet est déplacé axialement d'une extrémité EM (par exemple EM1) à l'extrémité EF correspondante (EF1 en l'occurrence), puis à l'autre extrémité EF et enfin à l'autre extrémité EM quel que soit le sens de déplacement du boulet.

Le déplacement du boulet s'effectue de manière connue de l'homme de l'art (voir notamment les documents US 6,604,763 et WO 03/071086), par exemple par traction à l'aide de tiges de forage ou bien en exerçant une pression hydraulique. Le boulet a par exemple une forme cylindro-conique avec une partie conique d'entrée chargée d'effectuer l'expansion et prolongée par une partie cylindrique médiane. Mais, sa forme peut être également sphérique ou biconique (partie conique d'entrée prolongée par une partie cylindrique, elle-même prolongée par une partie conique de sortie). Les rayons de raccordement de ces trois parties du boulet sont choisis en fonction des besoins.

D'autres outils d'expansion peuvent être utilisés à la place des boulets, comme par exemple un outil d'expansion rotatif à trois rouleaux réalisant une expansion mécanique. Ces outils d'expansion (y compris les boulets) et leurs modes d'utilisation sont notamment décrits dans les documents brevets WO 02/081863, US 6,457,532 et US 2002/0139540.

L'expansion diamétrale s'effectue dans le domaine des déformations plastiques. Les déformations plastiques générées augmentant la limite d'élasticité des éléments tubulaires, on doit par conséquent utiliser des métaux supportant de telles déformations. Par exemple, un tube présentant initialement une limite d'élasticité de 310 MPa (45 KSI) voit cette limite passer à 380 MPa (55 KSI) après expansion.

Lorsque le boulet parvient au niveau de la quatrième surface interne SI4 de la seconde partie P2 de l'extrémité mâle EM et de la cinquième surface interne SI5 de la seconde partie P4 de l'extrémité femelle EF, la matière expansée contraint la première lèvre L1 à se déformer dans la gorge G1 correspondante. Les déformations subies par le joint pendant l'expansion sont matérialisées par les flèches F3 à F6 sur la figure 7.

Plus précisément, la première lèvre L1 est contrainte de se courber (flèche F4) et de prendre au moins en partie la forme de la gorge G1. Il se crée alors, comme illustré sur la figure 8, au niveau de la première surface externe SE1 de l'extrémité mâle EM, juste avant la première lèvre L1, un épaulement ou talon annulaire EP qui permet de créer une zone d'étanchéité par contacts serrants de type "métal sur métal".

L'épaulement EP et l'étanchéité peuvent être renforcés par la présence d'une surépaisseur annulaire locale SA1 en direction de l'intérieur du tube T1, T2 au niveau de la quatrième surface interne SI4 et au voisinage de la deuxième surface de butée SB2. Préférentiellement, comme illustré sur les figures 3 et 5 à 7, cette surépaisseur SA1 est sensiblement constante dans la zone d'extension de la partie centrale PC de la gorge G1, puis elle décroît. Cette décroissance est préférentiellement sensiblement continue en direction de la première partie P1. Elle peut par exemple se faire selon un angle α9 par rapport à la direction longitudinale A compris entre environ 5° et environ 30°, et plus préférentiellement entre environ 10° et environ 20°, et encore plus préférentiellement égal à environ 12°.

La surépaisseur maximale au niveau de la zone d'épaisseur constante définit un diamètre intérieur minimal de l'élément mâle EM. Ce diamètre intérieur doit être supérieur au diamètre d'un tampon (appelé "drift" par l'homme du métier). Le tampon (ou drift) est un outil qui est introduit à l'intérieur des tubes, avant de les descendre dans les puits, afin de s'assurer qu'ils disposent d'un diamètre libre intérieur minimal garantissant le passage d'outils dans la colonne sans risque d'accrochage. Lorsqu'elle demeure inférieure à la valeur mentionnée ci-avant, la valeur optimale de la surépaisseur est alors fixée par la quantité de matière nécessaire pour faire monter au maximum la première lèvre L1 dans le fond de la gorge G1 lors de l'expansion afin qu'elle se déforme conformément aux besoins. Par exemple cette surépaisseur est égale à environ 0,8 mm.

Cette surépaisseur SA1 offre un surplus de matière qui permet de combler l'espace vide de la gorge G1, et par conséquent permet à la première lèvre L1 et la zone située juste avant celle-ci de prendre la conformation d'une partie au moins de ladite gorge G1, et donc de présenter sensiblement la déformation recherchée.

La déformation génère, comme indiqué ci-avant, l'épaulement ou talon annulaire EP, au niveau de la première surface externe SE1 de l'extrémité mâle EM, avant la première lèvre L1, qui permet de créer une zone d'étanchéité par contacts serrants de la manière indiquée ci-dessous.

L'expansion effectuée par le boulet se traduit, du fait du diamètre de l'élément femelle EF plus grand que celui de l'élément mâle EM, par un taux d'expansion de l'élément mâle EM plus grand que celui de l'élément femelle EF.

Il s'en suit, du fait de la conservation de la matière, une contraction de l'élément mâle EM plus importante que celle de l'élément femelle EF, ce qui se traduit par un déplacement relatif axial de ces deux éléments dans le sens d'un dégagement matérialisé par les flèches F5 et F6 de la figure 7. Ce déplacement vient serrer fortement l'un contre l'autre les épaulements inclinés EP, créant l'étanchéité visée. On peut noter que la pression de contact ou serrage est encore renforcée lorsque le joint est soumis à des efforts de traction axiale.

En raison du désengagement axial lors de l'expansion, les longueurs axiales des première L1 et seconde L2 lèvres doivent être choisies de façon précise. En effet, si la première lèvre L1 est trop courte, elle risque de sortir de son logement LO et donc de plonger vers l'axe du joint, supprimant ainsi l'étanchéité après expansion. Si la seconde lèvre L2 est trop longue, le logement LO est difficile à usiner.

La courbure de la première lèvre L1 lors de l'expansion, favorisée par la forme de la gorge G1 et la surépaisseur SA1, se traduit par un second contact serrant entre la partie interne de l'extrémité de la première lèvre L1 et la deuxième surface externe SE2.

La première lèvre L1 est alors arc-boutée et coincée entre l'épaulement constitué dans la paroi de la gorge G1 et la deuxième surface externe SE2. Un tel double contact permet d'assurer une excellente étanchéité, stable pour les différents modes de chargement possibles, comprenant tant la pression intérieure qu' extérieure combinée ou non à des efforts de traction ou de compression axiale.

Afin de favoriser encore plus la courbure de la première lèvre L1 et de renforcer encore le contact entre l'épaulement ou talon EP et la gorge G1, on peut prévoir, comme illustré sur les figures 3 et 5 à 7, un décrochement DC1 vers l'intérieur du tube T1, T2, au niveau de la première surface externe SE1 et avant la première partie P1. Ce décrochement DC1 est préférentiellement sensiblement continu. Il constitue ainsi initialement un chanfrein conique. Il peut par exemple se faire selon un angle α6 par rapport à la direction longitudinale A, compris entre environ 8° et environ 12°, et plus préférentiellement égal à environ 10°. Par exemple, ce décrochement DC1 débute à une distance de la première surface de butée axiale SB1 (suivant la direction longitudinale A) égale à environ 7,8 mm.

Par ailleurs, afin de disposer de matière là où elle est nécessaire, les tubes T1 et T2 peuvent subir au niveau de leurs premières P1 et secondes P2 parties, et avant usinage de leur élément mâle EM1, EM2, un rétreint conique de demi-angle au sommet α7, le diamètre du cône allant en diminuant lorsque l'on se dirige vers l'extrémité libre de l'élément mâle EM 1, EM2.

Ce rétreint permet d'augmenter l'épaisseur de matière au niveau de la seconde partie P2 et de loger la surépaisseur SA1. Après usinage de l'élément mâle EM1, EM2 et notamment de la surépaisseur SA1, la trace du rétreint se traduit par un décrochement annulaire local DC2 vers l'intérieur du tube lorsque l'on se dirige vers l'extrémité libre de l'élément mâle EM1, EM2.

Pour ne pas gêner la progression du boulet dans les tubes T1 et T2, le rétreint est préférentiellement sensiblement continu et l'angle α7 compris entre environ 2° et environ 20°, et plus préférentiellement égal à environ 5°.

Lorsque la première surface interne SI1 de la première lèvre L1 présente une inclinaison (par exemple d'environ 2,5°), cela permet à la seconde lèvre L2 d'être placée plus près de l'extérieur du manchon M. Par conséquent, lorsque le boulet parvient au niveau de la seconde lèvre L2, celle-ci peut se rapprocher de l'extérieur du manchon M. En outre, cela permet de limiter l'effet "banane" qui tend à faire tomber la seconde lèvre L2 vers l'intérieur de la cavité du manchon M.

Ce rapprochement peut être accentué par la présence d'une surépaisseur annulaire locale SA2 en direction de l'intérieur du manchon M, au niveau de la deuxième surface interne SI2 de chaque seconde lèvre L2 et au voisinage de la troisième surface de butée SB3. Préférentiellement, comme illustré sur les figures 4 à 7, cette surépaisseur SA2 est sensiblement constante dans la zone d'extension de la seconde lèvre L2, puis elle décroît. Cette décroissance est préférentiellement sensiblement continue. Elle constitue ainsi initialement un chanfrein conique. Elle peut par exemple se faire selon un angle α8 par rapport à la direction longitudinale A, compris entre environ 8° et environ 12°, et plus préférentiellement égal à environ 10°.

Cette surépaisseur SA2 dépend préférentiellement de la surépaisseur SA1 et est préférentiellement inférieure à celle-ci. Elle est de toute façon inférieure à une valeur maximale définie par les dimensions du tampon (ou "drift"). Par exemple, cette surépaisseur SA2 est comprise entre environ 0,3 mm et 0,8 mm, et de préférence égale à environ 0,5 mm. Le décalage initial offert par des surépaisseurs SA1 et SA2 différentes permet de favoriser la déformation finale, notamment de la première lèvre L1. Ce décalage ne doit cependant pas être trop important car il pourrait annuler l'effet précité offert par l'inclinaison de la première surface interne SI1 de la première lèvre L1 (lorsqu'elle existe).

Une fois que le boulet a expansé le joint au niveau de la connexion entre le tube T2 et une extrémité du manchon M, il poursuit son déplacement axial afin d'expanser l'autre joint de l'assemblage au niveau de la connexion entre le manchon M et le tube T1 (ce qui revient à effectuer de nouveau la quatrième étape).

Comme mentionné précédemment, le résultat de l'expansion induite par le passage du boulet est illustré sur la figure 8. Il est important de noter que dans les joints manchonnés, du fait que l'expansion provoque un désengagement axial, les déformations des première L1 et seconde L2 lèvres peuvent ne pas être totalement identiques aux deux extrémités opposées du manchon. Cette différence (ou dissymétrie) est cependant moindre que celle survenant dans les joints manchonnés décrits dans le document WO 03/060370.

Il est également important de noter que le retour élastique des éléments de chaque joint fileté de l'assemblage après le passage du boulet est négligeable devant les déformations plastiques mises enjeu.

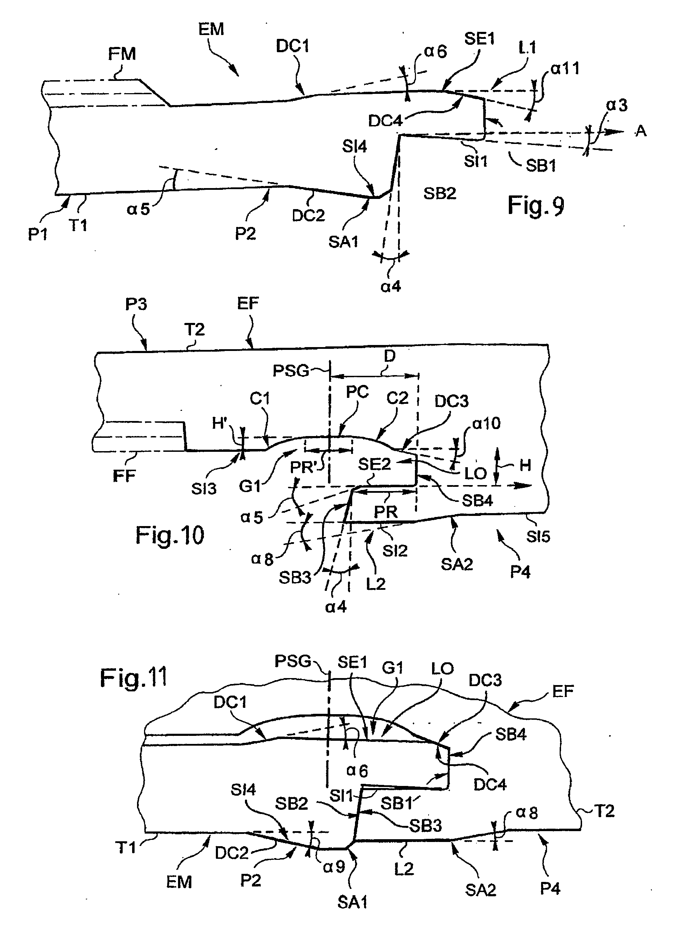

On se réfère maintenant aux figures 9 à 11 pour décrire un autre exemple de réalisation d'un joint expansible selon l'invention.

Cet exemple de réalisation comporte de nombreuses similitudes avec celui précédemment décrit en référence aux figures 1 à 8. Par conséquent, leurs éléments communs portent des références identiques. En outre, les éléments de formes sensiblement identiques et assurant des fonctions sensiblement identiques ne seront pas de nouveau décrits.

Par ailleurs, cet exemple de réalisation, tout comme le précédent, concerne non seulement les joints permettant de connecter l'extrémité de type mâle EM (ou élément tubulaire mâle) d'un premier tube T1, de grande longueur et d'axe de révolution XX, et l'extrémité de type femelle EF (ou élément tubulaire femelle) d'un second tube T2, également de grande longueur et d'axe de révolution XX, mais également les assemblages de deux joints disposés symétriquement, décrits ci-avant en référence à la figure 9 et permettant de connecter deux tubes T1 et T2 de grandes longueurs par l'intermédiaire d'un élément tubulaire de type manchon de raccordement M.

Ce qui différencie cet exemple de réalisation du précédent, c'est principalement le détail de réalisation des deuxième SB2 et troisième SB3 surfaces de butée, ainsi qu'éventuellement le détail de réalisation des première surface externe SE1 et troisième surface interne S13, des premier EM et second EF éléments tubulaires, qui permettent de réaliser les premières et troisièmes étanchéités (ou contacts serrant), avant expansion.

La deuxième surface de butée SB2 et la troisième surface de butée SB3 possèdent toujours initialement des surfaces coniques présentant des inclinaisons d'angles α4 choisis par rapport à un plan perpendiculaire à la direction longitudinale A, sensiblement identiques. Mais, dans ce second exemple de réalisation, les surfaces coniques des deuxième surface de butée SB2 et troisième surface de butée SB3 sont respectivement concave et convexe.

Les inclinaisons des angles α4 sont choisies de sorte que la deuxième surface de butée SB2 s'appuie contre la troisième surface de butée SB3 en induisant le premier contact serrant radial et étanche de la première surface externe SE1 (de la première lèvre L1) contre la troisième surface interne SI3.

Préférentiellement, comme illustré sur les figures 9 à 11, les deuxième SB2 et troisième SB3 surfaces de butée présentent sensiblement une même inclinaison initiale. Cette inclinaison commune est préférentiellement comprise entre un angle α4 d'environ +5° et un angle α4 d'environ+30°. Elle est plus préférentiellement encore égale à environ 10°.

Lorsque la deuxième surface de butée SB2 s'appuie contre la troisième surface de butée SB3 pendant la phase de vissage, la première lèvre L1 est contrainte à se diriger vers l'extérieur de la connexion. Cela permet de pré-contraindre radialement la première lèvre L1 et donc de renforcer son contact avec le second élément tubulaire EF au niveau du logement LO.

Par ailleurs, il est avantageux que la troisième surface interne SI3 du second élément tubulaire EF comprenne une portion DC3, placée entre sa liaison avec la quatrième surface de butée SB4 et la seconde portion curviligne C2 de la gorge G1, et dans laquelle est défini initialement une première surface d'étanchéité présentant globalement une inclinaison d'un angle α10 choisi par rapport au plan transverse à la direction longitudinale A.

Cette première surface d'étanchéité DC3 peut être éventuellement définie par un troisième décrochement annulaire local vers l'intérieur de la troisième surface interne SI3. Elle peut se présenter sous la forme d'une surface conique ou d'une surface bombée, présentant éventuellement une portion de type torique.

L'angle d'inclinaison α10 de la première surface d'étanchéité (éventuellement du troisième décrochement annulaire local) DC3 est initialement compris, de préférence, entre environ +1 et environ +30°, et plus préférentiellement égal à environ 10°.

Par ailleurs, la première surface externe SE1 du premier élément tubulaire EM comprend une zone terminale, située au niveau de sa liaison avec la première surface de butée SB 1 (et donc au niveau de la première lèvre L1), et dans laquelle est initialement définie une seconde surface d'étanchéité présentant globalement une inclinaison d'un angle α11 choisi par rapport au plan transverse à la direction longitudinale A.

Cette seconde surface d'étanchéité peut être éventuellement définie par un quatrième décrochement annulaire local vers l'intérieur de la première surface externe SE1. Elle peut se présenter sous la forme d'une surface conique ou d'une surface bombée, présentant éventuellement une portion de type torique.

Cette seconde surface d'étanchéité DC4 est destinée à être serrée radialement pendant la phase de vissage, contre la première surface d'étanchéité DC3 du second élément tubulaire EF.

L'angle d'inclinaison α11 de la seconde surface d'étanchéité (éventuellement du quatrième décrochement annulaire local) DC4 est initialement compris, de préférence, entre environ +1° et environ+30°, et plus préférentiellement égal à environ 10°.

Les angles d'inclinaison α10 et α11 sont préférentiellement identiques. Mais, cela n'est pas obligatoire. On peut en effet envisager, par exemple, que l'une des première DC3 et seconde DC4 surfaces d'étanchéité soit conique ou bombée et présente une inclinaison non nulle, tandis que l'autre surface d'étanchéité est par exemple cylindrique et présente une inclinaison nulle.

Les première DC3 et seconde DC4 surfaces d'étanchéité, éventuellement définies par les troisième et quatrième décrochements annulaires locaux, sont respectivement agencées de manière à pouvoir être serrées radialement l'une contre l'autre, pendant la phase de vissage, en induisant un troisième contact serrant étanche.

Par ailleurs, les première DC3 et seconde DC4 surfaces d'étanchéité peuvent être agencées de manière à ce que le premier contact serrant étanche soit induit après le troisième contact serrant étanche. Cela permet en effet de renforcer le premier contact serrant étanche.

En d'autres termes, pendant la phase de vissage il est préférable que la première lèvre L1 entre tout d'abord en contact par la première surface d'étanchéité DC3 avec la seconde surface d'étanchéité DC4, puis que la deuxième surface de butée SB2 s'appuie sur la troisième surface de butée SB3.

Dans cet exemple de réalisation, la partie centrale PC de la gorge annulaire G1 s'étend par exemple sur une longueur axiale PR' égale à environ 2,2 mm, une profondeur radiale H' égale à environ 1 mm, et les portions curvilignes C1 et C2 présentent par exemple un rayon de courbure égal à environ 5,3 mm. Par ailleurs, la distance axiale D qui sépare le plan de symétrie PSG, de la gorge G1, de la quatrième surface de butée axiale SB4, qui définit le fond du logement (ou rainure) LO, est par exemple égale à environ 5,7 mm.

Le logement LO s'étend toujours sur une longueur axiale choisie PR, égale à celle de la seconde lèvre L2, et suivant une profondeur radiale choisie H (perpendiculaire à la direction longitudinale A). Le rapport PR/H est toujours préférentiellement compris entre environ 1 et environ 3, mais il est désormais plus préférentiellement compris entre environ 1,4 et environ 1,9, et encore plus préférentiellement égal à environ 1,7. Par exemple, PR est égal à 4,2 mm et H est égal à 2,4 mm, ce qui fournit un rapport PR/H égal à environ 1,7.

Par ailleurs, comme dans l'exemple de réalisation précédent, la deuxième surface externe SE2 de la seconde lèvre L2 peut présenter sur une courte distance une inclinaison d'un angle choisi α5 par rapport à la direction longitudinale A, au niveau de sa liaison avec la troisième surface de butée SB3. Elle forme ainsi initialement un chanfrein de surface conique dont l'inclinaison est initialement comprise entre un angle d'environ +8° et un angle d'environ +12°, et plus préférentiellement égale à environ 10°. Comme indiqué précédemment, cela permet de faciliter la pénétration de la première lèvre L1 dans le logement (ou rainure) LO, notamment dans le cas d'interférences accidentelles.

En outre, comme dans l'exemple de réalisation précédent, la première surface interne SI1 de la première lèvre L1 est de préférence inclinée d'un angle α3 choisi par rapport à la direction longitudinale A du tube T1. Elle forme ainsi initialement une surface conique. L'angle d'inclinaison est toujours, de préférence, compris entre environ 0,1° et environ 15°, et plus préférentiellement égal à environ 2,5°. Comme indiqué précédemment, cette inclinaison permet à la seconde lèvre L2 de se rapprocher de l'extérieur du tube T2 lors du passage du boulet, limitant ainsi l'effet banane.

De plus, comme dans l'exemple de réalisation précédent, afin de favoriser la courbure de la première lèvre L1 et de renforcer le contact entre l'épaulement ou talon EP et la gorge G1, la première surface externe SE1 peut comprendre juste avant la première partie P1 un premier décrochement DC1 vers l'intérieur du tube T1, préférentiellement sensiblement continu. Ce premier décrochement DC 1 constitue initialement un chanfrein conique d'angle α6, par rapport à la direction longitudinale A, compris entre environ 8° et environ 12°, et plus préférentiellement égal à environ 10°. Par exemple, ce décrochement DC 1 débute à une distance de la première surface de butée axiale SB1 (suivant la direction longitudinale A) égale à environ 8,1 mm.

Toujours comme dans l'exemple de réalisation précédent, la quatrième surface interne SI4 peut comprendre une surépaisseur annulaire locale SA1 en direction de l'intérieur du tube T1, au voisinage de la deuxième surface de butée SB2. Préférentiellement, comme illustré sur les figures 9 et 11, cette surépaisseur SA1 est sensiblement constante dans la zone d'extension de la partie centrale PC de la gorge G1, puis elle décroît, préférentiellement de façon sensiblement continue en direction de la première partie P1. Elle peut par exemple se faire selon un angle α9 par rapport à la direction longitudinale A compris entre environ 5° et environ 30°, et plus préférentiellement entre environ 10° et environ 20°, et encore plus préférentiellement égal à environ 12°.

De même, la cinquième surface interne SI5 de la seconde lèvre L2 peut comprendre, comme dans l'exemple de réalisation précédent, une surépaisseur annulaire locale SA2 en direction de l'intérieur du tube T2, au voisinage de la troisième surface de butée SB3. Préférentiellement, comme illustré sur les figures 10 et 11, cette surépaisseur SA2 est sensiblement constante dans la zone d'extension de la seconde lèvre L2, puis elle décroît préférentiellement de façon sensiblement continue. Elle constitue ainsi initialement un chanfrein conique. Elle peut par exemple se faire selon un angle α8 par rapport à la direction longitudinale A, compris entre environ 8° et environ 12°, et plus préférentiellement égal à environ 10°. Cette surépaisseur SA2 dépend préférentiellement de la surépaisseur SA1 et est plus préférentiellement encore inférieure à celle-ci. Par exemple, cette surépaisseur SA2 est comprise entre environ 0,3 mm et 0,8 mm, et de préférence égale à environ 0,5 mm.

La constitution d'un joint expansé à partir d'un joint expansible du type de celui décrit ci-avant en référence aux figures 9 à 11 est sensiblement identique à celle décrite en référence aux figures 5 à 8.

Dans une première étape, on visse l'extrémité, par exemple mâle EM, de l'un des tubes, par exemple T1, sur l'extrémité, par exemple femelle EF, de l'autre tube, par exemple T2, jusqu' à ce que la seconde surface d'étanchéité DC4 entre en contact avec la première surface d'étanchéité DC3 en induisant le troisième contact serrant étanche.

Dans une deuxième étape, on poursuit le vissage jusqu'à ce que la deuxième surface de butée SB2 de la première lèvre L1 s'appuie sur la troisième surface de butée SB3 de la seconde lèvre L2 en induisant le premier contact serrant radial et étanche de la première surface externe SE1 contre la troisième surface interne SI3.

Dans une troisième étape, on poursuit encore le vissage afin de pré-contraindre radialement la première lèvre L1 grâce à l'inclinaison (ou pente) des deuxième SB2 et troisième SB3 surfaces de butée et grâce à l'inclinaison (ou pente) des première DC3 et seconde DC4 surfaces d'étanchéité du logement LO et de la première lèvre L1, jusqu'à un niveau de couple spécifié.

Le contact entre les surfaces internes et externes de la lèvre L1 et du logement LO est ainsi encore plus renforcé que dans l'exemple précédent, ce qui permet d'assurer une étanchéité du joint encore plus importante avant l'étape d'expansion diamétrale.

On obtient ainsi, avant expansion, une excellente étanchéité aux fluides sous pression interne, y compris en présence de forces de traction ou de compression axiale.

La quatrième étape, qui consiste à expanser diamétralement le joint dans le domaine des déformations plastiques par introduction axiale dans l'un des tubes T1 et T2 d'un outil d'expansion diamétrale, comme par exemple un boulet à tête conique, est identique à celle décrite précédemment.

En fin d'expansion, un quatrième contact serrant étanche est défini entre une extrémité libre de la première lèvre L1 (au niveau de sa première surface interne SI1) et la deuxième surface externe SE2 de la seconde lèvre L2. Ainsi, la première lèvre L1 est coincée par son extrémité libre, du fait du quatrième contact serrant, et par le "talon" qui la prolonge au niveau de la première surface externe SE1, du fait du second contact serrant.

Lorsque le premier élément tubulaire EM comprend une première surface d'étanchéité DC3, et éventuellement lorsque le second élément tubulaire EF comprend une seconde surface d'étanchéité DC4, l'écart des performances d'étanchéité entre les côtés amont et aval d'un assemblage de joints est sensiblement réduit une fois la quatrième étape terminée. Cela résulte d'une augmentation des pressions de contact du côté amont sans détérioration des pressions de contact du côté aval.

Grâce à l'invention, on "dissymétrise" faiblement les déformations subies par les deux j oints d'un assemblage manchonné lors de l'expansion, ce qui permet d'obtenir des assemblages de joints (ou joints manchonnés) qui présentent une bonne, voire même excellente, étanchéité aux gaz sous haute pression, internes comme externes, avant comme après la phase d'expansion, y compris en présence de taux d'expansion élevés, voire très élevés, typiquement compris entre 10% et 35%. Bien entendu, l'invention s'applique également aux taux d'expansion inférieurs à 10%.

Par ailleurs, l'invention peut être mise en oeuvre dans une gamme importante d'aciers et d'alliages, du moment que le matériau présente une ductilité suffisante pour subir l'expansion. Dans le cas des aciers le matériau peut être un acier non allié, ou un acier au Mn, ou un acier au Cr-Mo, ou un acier micro-allié, ou un acier au Bore, ou une combinaison des compositions précitées (acier au Cr-Mo-Nb-B), ou un acier à 13% de Cr martensique, ou un acier duplex austéno-ferritique à 22 ou 25% de Chrome, ou encore un acier inoxydable austénitique. Par exemple, on peut utiliser un acier au C-Mn pour des puits non corrosifs, ou bien un acier à 0,2% de C et 13% de Cr (X2OCr13 selon la dénomination Euronorm et AISI 420 selon la dénomination américaine) pour des puits corrosifs contenant du CO₂.

En outre, le matériau peut être éventuellement traité thermiquement de manière à présenter une limite d'élasticité supérieure à une valeur choisie ou comprise dans un intervalle de valeurs choisies. La limite d'élasticité minimale peut par exemple être choisie dans un intervalle allant de 300 MPa à 1000 MPa, voire plus.

L'invention ne se limite pas aux procédés et aux modes de réalisation d'assemblages de joints tubulaires filetés étanches décrits ci-avant, seulement à titre d'exemple, mais elle englobe toutes les variantes que pourra envisager l'homme de l'art dans le cadre des revendications ci-après.

## Revendications

1. Assemblage de deux joints tubulaires filetés étanches expansibles, disposés symétriquement par rapport à un plan de symétrie perpendiculaire à la direction longitudinale et comprenant chacun, d'une part, un premier élément tubulaire (EM) placé à une extrémité d'un tube (T1, T2) et comportant une première partie (P1), munie d'un filetage mâle (FM), et une seconde partie (P2) prolongeant ladite première partie et comprenant i) une première surface externe (SE1), ii) une première lèvre annulaire (L1) ayant une première surface de butée axiale (SB1) et une première surface interne (SI1) et délimitée par ladite première surface externe (SE1) sur une partie de la longueur axiale de celle-ci, et iii) une deuxième surface de butée (SB2), et d'autre part, un second élément tubulaire (EF1, EF2) comportant i) un filetage femelle (FF), homologue du premier filetage mâle (FM) et vissé sur celui-ci, ii) une seconde lèvre annulaire (L2), ayant une troisième surface de butée (SB3), une deuxième surface externe (SE2), propre à être placée en regard de ladite première surface interne (SI1), et une deuxième surface interne (SI2), et iii) une troisième surface interne (SI3) et une quatrième surface de butée axiale (SB4) définissant avec la deuxième surface externe (SE2) un logement annulaire (LO) homologue de la première lèvre (L1) correspondante et recevant celle-ci, **caractérisé en ce que** lesdits deux seconds éléments tubulaires (EF1, EF2) constituent deux extrémités opposées d'un manchon de raccordement (M) de type femelle/femelle, séparées par une partie centrale (PCM) initialement munie, sur une surface externe, d'une zone annulaire (G2) présentant une sous-épaisseur initiale choisie de sorte que la section du manchon (M) au niveau de cette zone (G2) soit supérieure ou égale au produit de la section d'une partie courante desdits tubes (T1, T2) par l'efficacité du joint, que chaque deuxième surface de butée (SB2) soit en appui contre la troisième surface de butée (SB3) correspondante et/ou que chaque première surface de butée (SB 1) soit en appui contre la quatrième surface de butée (SB4) correspondante et **en ce que** l'assemblage est apte à développer après une expansion diamétrale dans le domaine de la déformation plastique des contacts serrants et étanches rendant l'assemblage étanche.

2. Assemblage selon la revendication 1, **caractérisé en ce que** ladite zone de sous-épaisseur (G2) présente une forme de cuvette munie d'une partie centrale présentant ladite sous-épaisseur maximale et de parois latérales inclinées selon un angle inférieur à environ 30° par rapport à la direction longitudinale du tube (T1, T2).

3. Assemblage selon la revendication 2, **caractérisé en ce que** ledit angle est égal à environ 15°.

4. Assemblage selon l'une des revendications 2 et 3, **caractérisé en ce que** ladite cuvette (G2) s'étend sensiblement dans une zone comprise entre des derniers filets des deux filetages femelles (FF).

5. Assemblage selon la revendication 4, **caractérisé en ce que** ladite cuvette (G2) s'étend sensiblement entre lesdites troisièmes surfaces de butée (SB3) des deux seconds éléments tubulaires (EF1, EF2).

6. Assemblage selon l'une des revendications 1 à 5, **caractérisé en ce que** ledit second élément tubulaire (EF) comprend en un endroit choisi de sa troisième surface interne (SI3) une gorge annulaire interne (G1) placée sensiblement au niveau de ladite première surface externe (SE1).

7. Assemblage selon la revendication 6, **caractérisé en ce que** ladite gorge (G1) comporte initialemcnt au moins deux portions curvilignes (C1, C2).

8. Assemblage selon la revendication 7, **caractérisé en ce que** lesdites portions curvilignes (C1, C2) présentent initialement des rayons de courbure sensiblement identiques.

9. Assemblage selon la revendication 8, **caractérisé en ce que** ledit rayon de courbure est initialement compris entre environ 2 mm et environ 20 mm.

10. Assemblage selon l'une des revendications 7 à 9, **caractérisé en ce que** les deux portions curvilignes (C1, C2) sont séparées par une partie centrale (PC) sensiblement cylindrique.

11. Assemblage selon l'une des revendications 7 à 10, **caractérisé en ce que** ladite gorge (G1) présente initialement une profondeur radiale (H') dont la valeur maximale est choisie de sorte que la section de matière en fond de gorge (G1) soit supérieure au produit de la plus faible section d'une partie courante desdits tubes (T1, T2) par l'efficacité du joint en traction.

12. Assemblage selon l'une des revendications 1 à 11, **caractérisé en ce que** lesdits filetages mâle (FM) et femelle (FF) comportent initialement des filets munis d'un flanc porteur présentant un angle négatif compris entre environ - 3° et environ -15°.

13. Assemblage selon l'une des revendications 1 à 12, **caractérisé en ce que** lesdits filetages mâle (FM) et femelle (FF) comportent initialement des filets munis d'un flanc d'engagement présentant un angle positif compris entre environ + 10° et environ + 30°.

14. Assemblage selon la revendication 13, **caractérisé en ce que** lesdits filetages mâle (FM) et femelle (FF) sont agencés pour présenter après vissage et avant expansion un jeu axial entre leurs flancs d'engagement compris entre environ 0,05 mm et environ 0,3 mm.

15. Assemblage selon l'une des revendications 1 à 14, **caractérisé en ce que** lesdits filetages mâle (FM) et femelle (FF) sont choisis dans un groupe comprenant les filetages de type conique et de type cylindrique, et sont chacun formés sur au moins une portion d'élément tubulaire (EM, EF).

16. Assemblage selon l'une des revendications 1 à 15, **caractérisé en ce que** lesdites première surface externe (SE1) et troisième surface interne (SI3) sont conformées de sorte qu'après expansion un contact serrant et étanche soit défini entre une portion de chacune d'elles.

17. Assemblage selon l'une des revendications 1 à 16, **caractérisé en ce que** lesdits premier (EM) et second (EF) éléments tubulaires expansibles sont conformés de sorte qu'après ladite expansion un contact serrant et étanche soit défini entre une partie d'extrémité interne de ladite première lèvre (L1) et ladite deuxième surface externe (SE2).

18. Procédé de réalisation d'un assemblage de deux joints tubulaires expansés, **caractérisé en ce qu'**il consiste, à partir desdits joints aptes à former un assemblage initial selon l'une des revendications précédentes,
- à visser lesdits premiers (EM1, EM2) et seconds (EF1, EF2) éléments tubulaires expansible jusqu'à ce que chaque deuxième surface de butée (SB2) s'appuie contre la troisième surface de butée (SB3) correspondante et/ou que chaque première surface de butée (SB1) s'appuie contre la quatrième surface de butée (SB4) correspondante, formant ainsi ledit assemblage initial, et
- à faire subir audit assemblage de joints tubulaires expansible une expansion diamétrale dans le domaine de la déformation plastique de manière à développer au moins un contact serrant étanche entre une surface de chaque seconde partie (P2) et une surface correspondante de chaque second élément tubulaire.

19. Procédé selon la revendication 18, **caractérisé en ce que** l'expansion radiale du joint est réalisée selon un taux d'expansion au moins égal à 10%.

## Patentansprüche

1. Verbund aus zwei dichten, dehnbaren Gewinderohrmuffen, die bezüglich einer Symmetrieebene, die senkrecht zu der Längsrichtung verläuft, angeordnet sind und jeweils aufweisen:
einerseits ein erstes rohrförmiges Element (EM), welches an einem Ende eines Rohrs (T1, T2) angeordnet ist und einen ersten Bereich (P1) aufweist, der mit einem Außengewinde (FM) versehen ist, und einen zweiten Bereich (P2), der den fläche ersten Bereich verlängert und aufweist: i) eine erste Außenfläche (SE1), ii) eine erste Ringlippe (L1), die eine erste axiale Anschlagsfläche (SB1) und eine erste Innenfläche (SI1) aufweist und von der ersten Außenfläche (SE1) auf einem Teil ihrer axialen Länge begrenzt ist, und iii) eine zweite Anschlagsfläche (SB2), und andererseits ein zweites Rohrelement (EF1, EF2) mit i) einem Innengewinde (FF), homolog zum ersten Außengewinde (FM) und auf dieses geschraubt, ii) einer zweiten Ringlippe (L2), die eine dritte Anschlagsfläche (SB3), eine zweite Außefläche (SE2), die so ausgebildet ist, dass sie gegenüber der ersten Innenfläche (SI1) angeordnet werden kann, und eine zweite Innenfläche (SI2) aufweist, und iii) einer dritten Innenfläche (SI3) und einer vierten axialen Anschlagsfläche (SB4), die mit der zweiten Außenfläche (SE2) ein Ringlager (LO) definiert, welches homolog zu der ersten entsprechenden Lippe (L1) ist und diese aufnimmt, **dadurch gekennzeichnet, dass** die beiden zweiten Rohrelemente (EF1, EF2) zwei sich gegenüberliegende Enden einer Verbindungsmuffe (M) vom Typ weiblich/weiblich bilden, die durch einen zentralen Bereich (PCM) getrennt sind, der ursprünglich auf einer Außenfläche mit einem ringförmigen Bereich (G2) versehen ist, der eine ursprüngliche Unterdicke aufweist, die derart gewählt ist, dass der Querschnitt der Muffe (M) auf der Höhe dieses Bereiches (G2) größer oder gleich dem Produkt des Querschnitts eines normalen Bereichs der Rohre (T1, T2) mit der Effizienz der Verbindung ist, dass jede zweite Anschlagsfläche (SB2) in Anlage auf der entsprechenden dritten Anschlagsfläche (SB3) ist und/oder dass jede erste Anschlagsfläche (SB1) in Anlage auf der entsprechenden vierten Anschlagsfläche (SB4) ist, und dadurch, dass der Verbund nach einer diametralen Dehnung in dem Bereich der plastischen Deformation klemmende und dichte Kontakte entwickeln kann, die den Verbund abdichten.

2. Verbund nach Anspruch 1, **dadurch gekennzeichnet, dass** der Bereich mit Unterdicke (G2) die Form einer Mulde aufweist mit einem mittleren Bereich, der die maximale Unterdicke aufweist, und mit unter einem Winkel kleiner als 30° bezüglich der Längsrichtung des Rohrs (T1, T2) geneigten Seitenwänden.

3. Verbund nach Anspruch 2, **dadurch gekennzeichnet, dass** der Winkel etwa gleich 15° ist.

4. Verbund nach einem der Ansprüche 2 und 3, **dadurch gekennzeichnet, dass** die Mulde (G2) sich im Wesentlichen in einem Bereich erstreckt, der zwischen den letzten Gewindegängen der beiden Innengewinde (FF) liegt.

5. Verbund nach Anspruch 4, **dadurch gekennzeichnet, dass** die Mulde (G2) sich im Wesentlichen zwischen den dritten Anschlagsflächen (SB3) der beiden zweiten Rohrelemente (EF1, EF2) erstreckt.

6. Verbund nach einem der Ansprüche 1 bis 5, **dadurch gekennzeichnet, dass** das zweite Rohrelement (EF) an einem Ort, ausgewählt auf der dritten Innenfläche (SI3), eine innere Ringnut (G1) aufweist, die im Wesentlichen auf der Höhe der ersten Außenfläche (SE1) angeordnet ist.

7. Verbund nach Anspruch 6, **dadurch gekennzeichnet, dass** die Nut (G1) ursprünglich mindestens zwei gebogene Bereiche (C1, C2) aufweist.

8. Verbund nach Anspruch 7, **dadurch gekennzeichnet, dass** die gebogenen Bereiche (C1, C2) ursprünglich Krümmungsradien aufweisen, die im Wesentlichen identisch sind.

9. Verbund nach Anspruch 8, **dadurch gekennzeichnet, dass** der Krümmungsradius ursprünglich zwischen ungefähr 2 mm und ungefähr 20 mm liegt.

10. Verbund nach einem der Ansprüche 7 bis 9, **dadurch gekennzeichnet, dass** die beiden gebogenen Bereiche (C1, C2) durch einen mittleren Bereich (PC) voneinander getrennt sind, der im Wesentlichen zylinderförmig ist.

11. Verbund nach einem der Ansprüche 7 bis 10, **dadurch gekennzeichnet, dass** die Nut (G1) ursprünglich eine radiale Tiefe (H') aufweist, deren Maximalwert so gewählt ist, dass der Materialquerschnitt auf dem Grund der Nut (G1) größer ist als das Produkt aus dem kleinsten Querschnitt eines üblichen Bereichs der Rohre (T1, T2) mit der Effizienz der Verbindung unter Zugbelastung.

12. Verbund nach einem der Ansprüche 1 bis 11, **dadurch gekennzeichnet, dass** die Außengewinde (FM) und die Innengewinde (FF) ursprünglich Gewindegänge aufweisen, die mit einer Trägerflanke versehen sind, die einen negativen Winkel aufweist, der zwischen etwa -3° und etwa -15° liegt.

13. Verbund nach einem der Ansprüche 1 bis 12, **dadurch gekennzeichnet, dass** die Außengewinde (FM) und die Innengewinde (FF) ursprünglich Gewindegänge aufweisen, die mit einer Angriffsflanke versehen sind, die einen positiven Winkel aufweist, der zwischen ungefähr +10° und ungefähr +30° liegt.

14. Verbund nach Anspruch 13, **dadurch gekennzeichnet, dass** die Außengewinde (FM) und die Innengewinde (FF) so angeordnet sind, dass sie nach dem Verschrauben und vor der Dehnung ein axiales Spiel zwischen ihren Angriffsflanken aufweisen, das zwischen etwa 0,05 mm und etwa 0,3 mm liegt.

15. Verbund nach einem der Ansprüche 1 bis 14, **dadurch gekennzeichnet, dass** die Außengewinde (FM) und die Innengewinde (FF) aus einer Gruppe gewählt sind, die Gewinde vom Typ konisch und vom Typ zylindrisch umfasst, und wobei die Gewinde jeweils auf mindestens einem Bereich der Rohrelemente (EM, EF) geformt sind.

16. Verbund nach einem der Ansprüche 1 bis 15, **dadurch gekennzeichnet, dass** die erste Außenfläche (SE1) und die dritte Innenfläche (S13) so angepasst sind, dass nach der Dehnung ein klemmender und dichter Kontakt zwischen einem Bereich dieser beiden definiert ist.

17. Verbund nach einem der Ansprüche 1 bis 16, **dadurch gekennzeichnet, dass** das erste (EM) und das zweite (EF) dehnbare Rohrelement so angepasst sind, dass nach der Dehnung ein klemmender und dichter Kontakt zwischen einem inneren Endbereich der ersten Lippe (L1) und der zweiten Außenfläche (SE2) definiert wird.

18. Verfahren zur Herstellung eines Verbunds aus zwei gedehnten Rohrverbindungen, **dadurch gekennzeichnet, dass** es darin besteht, ausgehend von den Verbindungen, die geeignet sind, einen ursprünglichen Verbund nach einem der vorstehenden Ansprüche zu bilden:
- das erste (EM1, EM2) und das zweite (EF1, EF2) dehnbare Rohrelement miteinander zu verschrauben, bis jede der zweiten Anschlagsflächen (SB2) gegen die dritte entsprechende Anschlagsfläche (SB3) anliegt und/oder bis jede erste Anschlagsfläche (SB1) gegen die vierte entsprechende Anschlagsfläche (SB4) anliegt, um somit den ursprünglichen Verbund zu bilden und
- den Verbund der dehnbaren Rohrverbindungen einer diametralen Dehnung in dem Bereich der plastischen Verformung zu unterziehen, derart, dass mindestens ein dichter Klemmkontakt zwischen einer Fläche eines jeden zweiten Bereichs (P2) und einer entsprechenden Fläche eines jeden zweiten Rohrelements gebildet wird.

19. Verfahren nach Anspruch 18, **dadurch gekennzeichnet, dass** die radiale Dehnung der Verbindung mit einem Dehnungsgrad von mindestens gleich 10% durchgeführt wird.

## Claims

1. Assembly of two expandable sealing threaded tubular joints, disposed symmetrically with respect to a symmetry plane perpendicular to the longitudinal direction and each comprising, on the one hand, a first tubular element (EM) arranged at an end of a tube (T1, T2) and comprising a first portion (P1), provided with a male thread (FM), and a second portion (P2) extending said first portion and comprising i) a first outer surface (SE1), ii) a first annular lip (L1) having a first axial abutment surface (SB1) and a first inner surface (SI1) and delimited by said first outer surface (SE1) over a portion of the axial length thereof, and iii) a second abutment surface (SB2), and, on the other hand, a second tubular element (EF1, EF2) comprising i) a female thread (FF), matching the first male thread (FM) and screwed thereto, ii) a second annular lip (L2), having a third abutment surface (SB3), a second outer surface (SE2), capable of being arranged to face said first inner surface (SI1), and a second inner surface (SI2), and iii) a third inner surface (SI3) and a fourth axial abutment surface (SB4) defining with the second outer surface (SE2) an annular recess (LO) matching and receiving the corresponding first lip (L1), **characterised in that** said two second tubular elements (EF1, EF2) form two opposing ends of a female/female-type connection sleeve (M), separated by a central portion (PCM) initially provided, over an outer surface, with an annular zone (G2) having an initial reduced thickness selected such that the section of the sleeve (M) in the region of this zone (G2) is greater than or equal to the product of the section of a common portion of said tubes (T1, T2), and the efficiency of the joint, such that each second abutment surface (SB2) rests against the corresponding third abutment surface (SB3) and/or such that each abutment surface (SB1) rests against the corresponding fourth abutment surface (SB4) and **in that** the assembly is capable of developing, after diametral expansion in the plastic deformation region, sealing interference contacts sealing the assembly.

2. Assembly according to claim 1, **characterised in that** said zone of reduced thickness (G2) is in the form of a dish provided with a central portion having said maximum reduced thickness and lateral walls inclined at an angle of less than approximately 30º with respect to the longitudinal direction of the tube (T1, T2).

3. Assembly according to claim 2, **characterised in that** said angle is equal to approximately 15º.

4. Assembly according to either claim 2 or claim 3, **characterised in that** said dish (G2) extends substantially in a zone between last threads of the two female threads (FF).

5. Assembly according to claim 4, **characterised in that** said dish (G2) extends substantially between said third abutment surfaces (SB3) of the two second tubular elements (EF1, EF2).

6. Assembly according to one of claims 1 to 5, **characterised in that** said second tubular element (EF) comprises, at a selected location of its third inner surface (SI3), an inner annular groove (G1) arranged substantially in the region of said first outer surface (SE1).

7. Assembly according to claim 6, **characterised in that** said groove (G1) initially comprises at least two curvilinear portions (C1, C2).

8. Assembly according to claim 7, **characterised in that** said curvilinear portions (C1, C2) initially have substantially identical radii of curvature.

9. Assembly according to claim 8, **characterised in that** said radius of curvature is initially between approximately 2 mm and approximately 20 mm.

10. Assembly according to one of claims 7 to 9, **characterised in that** the two curvilinear portions (C1, C2) are separated by a substantially cylindrical central portion (PC).

11. Assembly according to one of claims 7 to 10, **characterised in that** said groove (G1) initially has a radial depth (H'), the maximum value of which is selected such that the material section at the bottom of the groove (G1) is greater than the product of the smallest section of a common portion of said tubes (T1, T2), and the efficiency of the joint under tension.

12. Assembly according to one of claims 1 to 11, **characterised in that** said male (FM) and female (FF) threads initially comprise threads provided with a carrier flank having a negative angle of between approximately -3º and approximately -15º.

13. Assembly according to one of claims 1 to 12, **characterised in that** said male (FM) and female (FF) threads initially comprise threads provided with a stabbing flank having a positive angle of between approximately +10º and approximately +30º.

14. Assembly according to claim 13, **characterised in that** said male (FM) and female (FF) threads are arranged to have, after screwing and prior to expansion, an axial clearance between their stabbing flanks of between approximately 0.05 mm and approximately 0.3 mm.

15. Assembly according to one of claims 1 to 14, **characterised in that** said male (FM) and female (FF) threads are selected from a group consisting of conical-type and cylindrical-type threads and are each formed over at least one tubular element portion (EM, EF).

16. Assembly according to one of claims 1 to 15, **characterised in that** said first outer surface (SE1) and third inner surface (SI3) are shaped in such a way that, after expansion, a sealing interference contact is defined between a portion of each of them.

17. Assembly according to one of claims 1 to 16, **characterised in that** said first (EM) and second (EF) expandable tubular elements are shaped in such a way that, after said expansion, a sealing interference contact is defined between an inner end portion of said first lip (L1) and said second outer surface (SE2).

18. Method for assembling two expanded tubular joints, **characterised in that** it consists, based on said joints capable of forming an initial assembly according to one of the preceding claims,
- in screwing said first (EM1, EM2) and second (EF1, EF2) expandable tubular elements until each second abutment surface (SB2) rests against the corresponding third abutment surface (SB3) and/or each first abutment surface (SB1) rests against the corresponding fourth abutment surface (SB4), thus forming said initial assembly, and
- in subjecting said assembly of expandable tubular joints to a diametral expansion in the plastic deformation region so as to develop at least one sealing interference contact between a surface of each second portion (P2) and a corresponding surface of each second tubular element.

19. Method according to claim 18, **characterised in that** the radial expansion of the joint takes place at an expansion rate at least equal to 10%.
